# EUROPÄISCHE PATENTSCHRIFT

(11) **EP 3 192 618 B1**
(45) Veröffentlichungstag und Bekanntmachung des Hinweises auf die Patenterteilung: **09.06.2021**
(21) Anmeldenummer: 17150123.2
(22) Anmeldetag: 03.01.2017
(51) Int. Cl.: B25J 15/06, B25J 19/00, F04F 5/52

(54) **VERFAHREN ZUM BETREIBEN EINER PNEUMATISCH ANGETRIEBENEN ANLAGE ZUR HANDHABUNG VON WERKSTÜCKEN SOWIE ANLAGE ZUR HANDHABUNG VON WERKSTÜCKEN**
METHOD FOR OPERATING A PNEUMATICALLY DRIVEN INSTALLATION FOR HANDLING WORK PIECES AND INSTALLATION FOR HANDLING WORKPIECES
PROCÉDÉ DE FONCTIONNEMENT D'UNE INSTALLATION PNEUMATIQUE DE MANIPULATION DE PIÈCES ET INSTALLATION DE MANIPULATION DE PIÈCES

(30) Priorität: 13.01.2016 DE 202016100111 U
(43) Veröffentlichungstag der Anmeldung: 19.07.2017
(73) Patentinhaber: J. Schmalz GmbH, 72293 Glatten (DE)
(72) Erfinder: DUNKMANN, Walter, 76530 Baden-Baden (DE); HOLECEK, Thomas, 72250 Freudenstadt (DE)
(74) Vertreter: DREISS Patentanwälte PartG mbB

(56) Entgegenhaltungen:
- EP-A2- 2 960 024
- DE-A1- 19 817 426
- DE-A1-102004 047 853
- US-A- 5 961 169

## Beschreibung

Die Erfindung betrifft ein Verfahren zum Betreiben einer pneumatisch angetriebenen Anlage zur Handhabung von Werkstücken gemäß dem Oberbegriff des Anspruchs 1, sowie eine Anlage zur Handhabung von Werkstücken gemäß dem Oberbegriff des Anspruchs 4.

Pneumatisch betriebene Anlagen kommen z.B. in Produktionsstraßen oder Bearbeitungsstraßen zum Einsatz. Insbesondere handelt es sich um pneumatisch betriebene Systeme, welche wenigstens einen mittels Druckluft angetriebenen Unterdruckerzeuger aufweisen (z.B. Ejektor), welcher mit Handhabungsvorrichtungen (z.B. Unterdruckgreifern oder Aktoren) fluidisch verbunden ist, um diese mit dem nötigen Unterdruck zu versorgen. Allgemein gesprochen umfassen die genannten Anlagen mehrere pneumatische Funktionseinheiten, welche mit Druckschläuchen verbunden sind.

Um die pneumatischen Funktionseinheiten bedarfsgerecht anzusteuern, umfassen die Anlagen in der Regel auch entsprechende Kontrolleinheiten. Die erforderliche Kommunikation zwischen Kontrolleinheit und pneumatischer Funktionseinheit erfolgt z.B. mittels elektrischer Signale durch Datenleitungen. Beispielsweise ist es bekannt, die Unterdruckerzeuger und Ventileinrichtungen einer Handhabungsanlage mit einem Bus-System zu koppeln, welches wiederum mit einer zentralen Steuereinrichtung verbunden ist (z.B. DE 198 17 426 A1). Auch eine drahtlose Kommunikation zwischen verschiedenen Einheiten einer Handhabungsanlage ist bekannt (z.B. EP 2 001 777 B1). Die verwendeten Kommunikationseinrichtungen sind vergleichsweise komplex, was Fehleranfälligkeit und zusätzlichen Montageaufwand mit sich bringen kann. Die DE 10 2004 047853 A1 beschreibt ein Verfahren mit den Merkmalen des Oberbegriffs des Anspruchs 1, sowie eine Anlage mit den Merkmalen des Oberbegriffs des Anspruchs 4.

Der Erfindung liegt die Aufgabe zugrunde, ein flexibel konfigurierbares und zuverlässig betreibbares Handhabungssystem bereitzustellen und den Montageaufwand für den Aufbau zu reduzieren.

Diese Aufgabe wird durch ein Verfahren gemäß Anspruch 1 sowie durch eine Anlage zur Handhabung von Werkstücken gemäß Anspruch 4 gelöst.

Mit dem Verfahren wird eine Anlage zur Handhabung von Werkstücken betrieben. Die Anlage umfasst mehrere pneumatisch betreibbare oder zur pneumatischen Steuerung dienende Pneumatik-Einheiten. Die Pneumatik-Einheiten weisen Verbindungen zu Druckschläuchen auf und/oder sind mittels Druckschläuchen fluidisch miteinander verbunden. Vorzugsweise handelt es sich um eine Pneumatik-Anlage zur Handhabung von Werkstücken, bei welcher die Pneumatik-Einheiten mittels Druckluft als Arbeitsfluid betrieben werden. Die Anlage umfasst außerdem wenigstens eine Kontrolleinheit, welche zur Ansteuerung wenigstens einer der Pneumatik-Einheiten mittels elektrischer Signale ausgebildet ist, und/oder welche Kontrolleinheit zum Empfangen und Auswerten von elektrischen Signalen von wenigstens einer der Pneumatik-Einheiten ausgebildet ist.

Zur Übertragung der elektrischen Signale zwischen Kontrolleinheit und Pneumatik-Einheit weisen sowohl die Kotrolleinheit als auch die Pneumatik-Einheit jeweils Signalschnittstellen auf, mittels welchen eine elektrische Signalübertragung über Signalübertragungsmittel erzielbar ist. Dabei ist vorgesehen, dass die Druckschläuche derart ausgebildet sind, dass die elektrischen Signale durch den jeweiligen Druckschlauch geleitet werden. Die Druckschläuche bilden somit die Signalübertragungsmittel, welche mit den Signalschnittstellen von Kontrolleinheit und Pneumatik-Einheiten verbunden sind. Die elektrischen Signale zwischen der Kontrolleinheit und den Pneumatik-Einheiten werden durch die Druckschläuche selbst übertragen.

Dabei ist eine Pneumatik-Einheit mit wenigstens zwei verschiedenen Druckschläuchen verbunden, welche auch mit der Kontrolleinheit verbunden sind. Dies ermöglicht es, als elektrische Signale eine elektrische Potentialdifferenz (Spannung) zu verwenden, die zwischen wenigstens zwei Druckschläuchen angelegt wird.

Zum Anlegen der Spannung ist vorgesehen, dass mittels der Signalschnittstellen eine leitfähige elektrische Verbindung von der Kontrolleinheit zu dem Druckschlauch bzw. von der Pneumatik-Einheit zu dem Druckschlauch bereitgestellt wird. Die elektrische Spannung wird dann vorzugsweise direkt über die leitfähige Verbindung an die Druckschläuche angelegt.

Insbesondere kann die Spannung zwischen zwei Druckschläuchen zeitabhängig variiert werden, um Informationen zu übermitteln.

Insbesondere ist bei der Anlage die Kontrolleinheit mit den an den Pneumatik-Einheiten angeschlossenen Druckschläuchen zumindest elektrisch verbunden. Dadurch kann eine zusätzliche elektrische Verkabelung innerhalb der Anlage eingespart werden. Der Montageaufwand wird vereinfacht und es können Kosten beim Aufbau eingespart werden. Da bei der genannten Ausgestaltung die fluidischen Wege und die Signalwege übereinstimmen, kann die Gefahr von Falschverbindungen beim Aufbau reduziert werden. Insgesamt kann ein System mit geringer Fehleranfälligkeit bereitgestellt werden.

Die Druckschläuche können grundsätzlich für Überdruck oder für Unterdruck ausgebildet sein. Im allgemeinen Sinn führen Druckschläuche den Arbeitsdruck; dieser kann entweder ein Überdruck oder ein Unterdruck sein. Beispielsweise übertragen Druckschläuche ein Arbeitsfluid mit dem erforderlichen Überdruck (insbesondere Druckluft) von einer Arbeitsfluidversorgung zu Ventileinrichtungen und/oder Unterdruckerzeugern. Andererseits können Druckschläuche auch einen Unterdruck von einem Unterdruckerzeuger z.B. zu einer Sauggreifvorrichtung übertragen.

Die Pneumatik-Einheiten können verschiedene Funktionseinheiten umfassen, z.B. pneumatisch betreibbare Handhabungseffektoren, insbesondere zum Fixieren und/oder Ansaugen und/oder Handhaben eines Werkstückes mittels Unterdruck, beispielsweise Sauggreifer. Die Pneumatik-Einheiten umfassen insbesondere wenigstens einen pneumatisch betreibbaren (d.h. mittels Druckluftzufuhr betreibbaren) Unterdruckerzeuger zur Versorgung des Handhabungseffektors mit Unterdruck. Insbesondere ist der Unterdruckerzeuger einerseits mit wenigstens einem Druckschlauch zur Druckversorgung verbunden und andererseits mit wenigstens einem weiteren Druckschlauch verbunden, welcher den erzeugten Unterdruck zu dem Handhabungseffektor leitet.

Die Pneumatik-Einheiten können auch ansteuerbare Steuerventile umfassen, welche mittels elektrischer Signale von der Kontrolleinheit steuerbar sind. Insbesondere ist ein Steuerventil derart angeordnet, dass mittels des Steuerventils die Druckluftzufuhr zu dem Unterdruckerzeuger steuerbar ist. Selbstverständlich können die Pneumatik-Einheiten auch weitere Funktionseinheiten umfassen, z.B. einen mit Arbeitsfluid betriebene Aktor, Pneumatikzylinder, o.Ä.

Die elektrischen Signale können Messwerte repräsentieren, welche von an den Pneumatik-Einheiten vorgesehenen Sensoren ermittelt werden. Mittels der elektrischen Signale kann Information, insbesondere durch zeitabhängige Veränderung der elektrischen Signale übertragen werden. Hierbei kann es grundsätzlich um analoge oder digitale Signale handeln. Allgemein können die elektrischen Signale auch Betriebsdaten der Pneumatik-Einheiten und/oder Steuersignale der Kontrolleinheit umfassen.

Die genannten Betriebsdaten der Pneumatik-Einheiten können verschiedenartige Informationen repräsentieren, beispielsweise Druck, Volumenstrom von Druckluft oder andere mit Sensoren erfasste pneumatische Daten. Denkbar ist auch eine Verwendung von Zustandsdaten, welche den aktuellen Betriebszustand wiedergeben und/oder eine Überwachung der Funktionalität erlauben (z.B. Volumenstrom der durch die Handhabungseffektoren durchströmenden Luft, eine Zykluszahl, usw.). Denkbar sind auch Ausgestaltungen, bei welchen die Betriebsdaten Kenngrößen der Handhabungseffektoren umfassen, so dass der Unterdruckerzeuger mittels der Kenngrößen eine funktionsgerechte Unterdruckversorgung vornehmen kann (beispielsweise ein typischer Schwelldruck, typische Evakuierungszeit, aktueller Energieverbrauch, maximal erreichter Unterdruck in dem Handhabungseffektor als Maß für die Dichtheit des Systems ...). Schließlich können die Betriebsdaten grundsätzlich auch Identifizierungsdaten enthalten, welche eine individuelle Erkennung der Handhabungseffektoren ermöglichen und beispielsweise Informationen über den Typ der angeschlossenen Handhabungseffektoren beinhalten.

Vorzugsweise ist die Kontrolleinheit zur Auswertung von Betriebsdaten des Unterdruckerzeugers und/oder von Betriebsdaten des Handhabungseffektors ausgebildet. Insbesondere ist die Kontrolleinheit auch zur Erzeugung von Steuersignalen in Abhängigkeit der ausgewerteten Betriebsdaten ausgebildet. Die Kontrolleinheit kann hierzu einen entsprechend programmierbaren Mikro-Controller aufweisen.

Zur weiteren Ausgestaltung können die Pneumatik-Einheiten Sensoren zur Detektion von Betriebsdaten aufweisen. Insbesondere ist ein Sensor der jeweiligen Pneumatik-Einheit mit der jeweiligen Signalschnittstelle der Pneumatik-Einheit verbunden, so dass die Betriebsdaten über die Druckschläuche übertragbar sind. Die Sensoren sind vorzugsweise in den Pneumatik-Einheiten integriert verbaut.

Zur fluidischen Verbindung können die Pneumatik-Einheiten eine Schlauchkopplung aufweisen, an welche wenigstens ein Druckschlauch ankoppelbar ist. Vorzugsweise ist vorgesehen, dass die Schlauchkopplung auch die Signalschnittstelle zur Übertragung der elektrischen Signale bereitstellt. Insbesondere ist die elektrische Signalstelle in die Schlauchkopplung integriert. Die Schlauchkopplung ist dazu ausgebildet, eine fluidische Verbindung herzustellen und kann zusätzlich auch die elektrische Verbindung zur Signalübertragung erzielen.

Eine einfache Kontaktierung wird dadurch ermöglicht, dass die Schlauchkopplung eine Kontaktierungsschneide aufweist, welche dazu ausgebildet ist, bei Verbindung mit dem Druckschlauch in eine Kontaktierungsschicht des Druckschlauches einzuschneiden. Die Kontaktierungsschicht bezeichnet dabei einen solchen Bereich des Druckschlauches, über welchen elektrische Signale in den Druckschlauch eingeleitet werden können, so dass diese weitergeleitet werden.

Konkret können die Druckschläuche eine Schlauchwandung aufweisen, welche einen Schlauchinnenraum zur Leitung von Arbeitsfluid zwischen den jeweils verbundenen Einheiten umschließt. Dabei kann die Schlauchwandung insgesamt aus einem elektrisch leitfähigen Material gebildet sein. Selbstverständlich kann zusätzlich eine die Schlauchwandung umschließende Schlauchhülle vorgesehen sein, wobei die Schlauchhülle elektrisch isolierend ist. Denkbar ist auch, dass in die Schlauchwandung wenigstens zwei elektrische Leitadern eingebettet sind. Die Leitadern sind vorzugsweise aus einem elektrisch leitfähigen Material, z.B. Metall. Dabei ist insbesondere denkbar, dass die Schlauchwandung im Übrigen aus einem elektrisch isolierenden Material gebildet ist.

Die Leitadern können drahtartig oder bandartig in der Schlauchwandung verlaufen. Eine bandartige Ausgestaltung ermöglicht eine leichte Kontaktierung, da große Kontaktflächen bereitgestellt werden können. Eine drahtartige Ausgestaltung der Leitadern ermöglicht eine einfache Herstellung und ein geringes Gewicht des Druckschlauches.

Insbesondere ist die zugeordnete Signalschnittstelle derart ausgebildet, dass verschiedene Leitadern eines Druckschlauches unabhängig voneinander elektrisch kontaktierbar sind.

Die Erfindung wird im Folgenden anhand der Figuren näher erläutert:
Es zeigen:
- Figur 1: skizzierte Darstellung einer Anlage zur Handhabung von Werkstücken;
- Figur 2: perspektivische Darstellung eines Ausschnitts aus einer Anlage zur Handhabung von Werkstücken, aufweisend u.a. eine Ventileinrichtung und eine Sauggreifvorrichtung;
- Figuren 3 bis 5: skizzierte Darstellungen von Querschnitten möglicher Ausgestaltungen der Druckschläuche.

In der nachfolgenden Beschreibung sowie in den Figuren sind für identische oder einander entsprechende Merkmale jeweils dieselben Bezugszeichen verwendet.

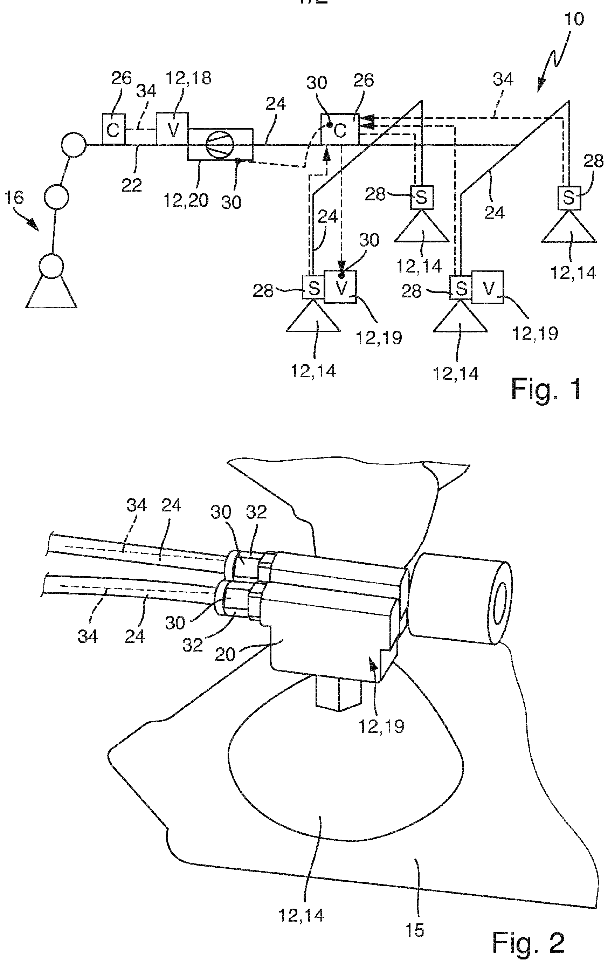

Das erfindungsgemäße Verfahren sowie die erfindungsgemäße Anlage sind beispielhaft anhand der in Figur 1 skizzierten Anlage 10 zur Handhabung von Werkstücken erläutert. Die Anlage 10 ist als Pneumatik-Anlage ausgebildet und umfasst eine Reihe von Pneumatik-Einheiten 12.

Im dargestellten Beispiel umfassen die Pneumatik-Einheiten 12 eine Mehrzahl von Sauggreifvorrichtungen 14, welche Handhabungseffektoren 14 der Anlage 10 bilden. Die Sauggreifvorrichtungen 14 können an einem geeigneten Basisgerüst angeordnet sein (nicht näher dargestellt). Mit einer solchen Gesamteinrichtung können auch räumlich ausgedehnte Werkstücke fixiert werden. Zur räumlichen Verlagerung der Handhabungseffektoren 14 kann ein Aktuator 16 vorgesehen sein, z.B. in der Art eines Roboterarmes (in Figur 1 nur skizziert).

Die Anlage 10 umfasst außerdem weitere Pneumatik-Einheiten, wie z.B. Ventileinrichtungen 18 und Steuerventile 19 für die Handhabungseffektoren 14. Um die Sauggreifvorrichtungen 14 mit dem erforderlichen Unterdruck zu versorgen, ist ein druckluftbetriebener Unterdruckerzeuger (Ejektor) 20 vorgesehen. Der Unterdruckerzeuger 20 bildet ebenfalls eine Pneumatik-Einheit.

Der Unterdruckerzeuger 20 ist im dargestellten Beispiel mittels eines skizzierten Druckschlauchs 22 mit einer nicht näher dargestellten Druckluftversorgung verbunden. Andererseits ist der Unterdruckerzeuger 20 mit Druckschläuchen 24 verbunden, welche den erzeugten Unterdruck zu den Handhabungseffektoren leiten. Wie beispielhaft skizziert, können die Druckschläuche 24 (und entsprechend 22) zwischen verschiedenen Pneumatik-Einheiten 12 verlaufen und diese miteinander verbinden. Außerdem können die Druckschläuche 22, 24 von einzelnen Pneumatik-Einheiten 12 zu anderen Einrichtungen führen (z.B. zu einer zentralen Druckluftversorgung).

Zur bedarfsgerechten Steuerung der verschiedenen Pneumatik-Einheiten 12 weist die Anlage 10 im dargestellten Beispiel zwei Kontrolleinheiten 26 auf. Die Kontrolleinheiten 26 können grundsätzlich verschiedene Funktionen haben. Beispielsweise kann eine Kontrolleinheit dazu ausgebildet sein, elektrische Signale von entsprechenden Sensoreinrichtungen mit Sensoren 28 zu empfangen und auszuwerten. Im dargestellten Beispiel überwachen diese Sensoren 28 einen in der Sauggreifvorrichtung 14 vorherrschenden Unterdruck. So kann z.B. ein Greifzustand detektiert werden. Andererseits kann die Kontrolleinheit dazu ausgestaltet sein, elektrische Signale zur Steuerung von Pneumatik-Einheiten 12 auszusenden. Im dargestellten Beispiel sind exemplarisch an einigen Sauggreifvorrichtungen 14 steuerbare Steuerventile 19 angeordnet, welche mittels der elektrischen Signale von der Kontrolleinheit 26 ansteuerbar sind. Entsprechend kann einem Druckeingang des druckluftbetriebenen Unterdruckerzeugers 20 eine Ventileinrichtung 18 vorgeschaltet sein, welche mittels elektrischer Steuersignale von einer Kontrolleinheit 26 ansteuerbar ist. In der Skizze gemäß Figur 1 sind die zugehörigen Signalwege, entlang welcher elektrische Signale übertragen werden, punktiert oder gestrichelt dargestellt.

Zur Übertragung der elektrischen Signale zwischen Kontrolleinheiten 26 und Pneumatik-Einheiten 12 weisen diese Einheiten jeweils Signalschnittstellen 30 auf (einige der Signalschnittstellen 30 sind in Figur 1 skizziert mit einem Bezugszeichen versehen).

Die Figur 2 zeigt einen Ausschnitt aus einer Anlage 10 mit einer Sauggreifvorrichtung 14 und einer dieser zugeordneten weiteren Pneumatik-Einheit 12. Die Sauggreifvorrichtung fixiert ein skizziertes Werkstück 15. Diese Pneumatik-Einheit 12 umfasst insbesondere ein ansteuerbares Steuerventil 19. Zusätzlich kann in der Pneumatik-Einheit 12 auch ein Unterdruckerzeuger 20 integriert sein (optional). Die Pneumatik-Einheit 12 ist mit zwei Druckschläuchen 24 verbunden (welche je nach Ausgestaltung Überdruck oder Unterdruck führen). Jeder Druckschlauch ist mit einer Schlauchkopplung 32 fluidisch mit der Pneumatik-Einheit 12 verbunden. Die Schlauchkopplung 32 umfasst auch eine integrierte Signalschnittstelle 30. Diese ist derart ausgebildet, dass der Druckschlauch 24 derart elektrisch kontaktiert wird, dass mittels des Druckschlauches 24 elektrische Signale zu der Pneumatik-Einheit 12 hin- und/oder von der Pneumatik-Einheit 12 weggeleitet werden können.

Hierzu sind die Druckschläuche 22 bzw. 24 derart ausgebildet, dass elektrische Signale mittels der Druckschläuche leitbar sind. Insofern bilden die Druckschläuche 22, 24 Signalübertragungsmittel 34 für die Anlage 10. Die Signalübertragungsmittel 34 entsprechen den gestrichelt bzw. punktiert dargestellten Signalübertragungswegen in Figur 1.

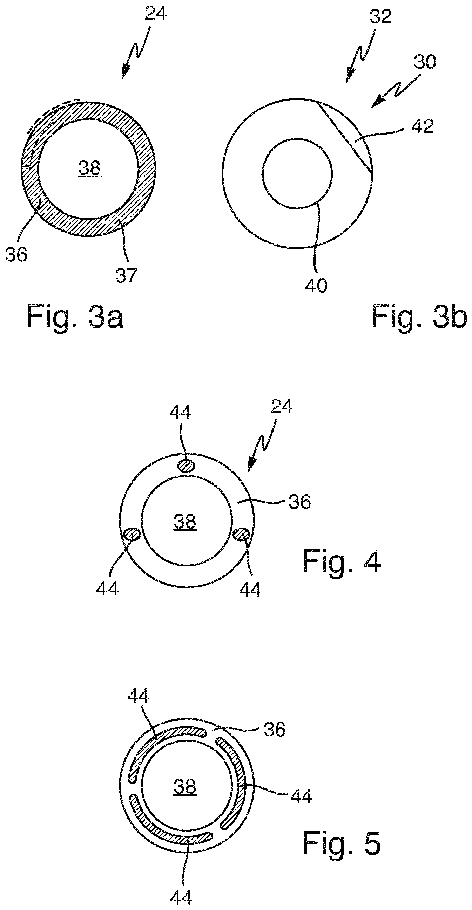

Eine einfache Ausgestaltung für einen geeigneten Druckschlauch 24 ist in Figur 3a skizziert (in einer Querschnittsdarstellung durch den Druckschlauch 24). Der Druckschlauch 24 umfasst eine Schlauchwandung 36, welche einen Schlauchinnenraum 38 umschließt. Das Material der Schlauchwandung ist, zumindest in einer innen liegenden Kontaktierungsschicht 37 der Schlauchwandung 36, elektrisch leitfähig ausgebildet. Beispielsweise können in das Material der Schlauchwandung 36 (z.B. flexibles Polymer) elektrisch leitfähige Bereiche oder Partikel eingebettet sein. Denkbar ist auch eine Ausgestaltung aus einem elektrischen Leiter insgesamt. Zusätzlich kann die Schlauchwandung 36 von einer in Bezug auf den Schlauchinnenraum 38 außenliegenden Schlauchhülle umgeben sein (nicht dargestellt).

Die Figur 3b zeigt in schematischer Darstellung eine entsprechende Schlauchkopplung 32 im Querschnitt, mittels welcher einerseits eine fluidische Verbindung zu einem Druckzugang 40 und andererseits eine elektrische Verbindung mittels der Signalschnittstelle 30 bereitgestellt werden kann. Hierzu kann die Schlauchkopplung 32 eine elektrische Kontaktierungsschneide 42 aufweisen. Diese ist derart ausgebildet und angeordnet, dass bei Kopplung des Druckschlauches 24 an die Schlauchkopplung 32 die Kontaktierungsschneide in die Kontaktierungsschicht 37 einschneidet.

Figur 4 zeigt eine weitere Ausgestaltung für einen Druckschlauch 24 im Querschnitt. Hierbei ist die den Schlauchinnenraum 38 umgebende Schlauchwandung 36 beispielsweise elektrisch isolierend ausgebildet. In die Schlauchwandung 36 sind drahtartige Leitadern 44 aus einem elektrisch leitfähigen Material eingebettet. Die Leitadern 44 können auch bandartig in dem Material der Schlauchwandung 36 verlaufen, wie in der schematischen Darstellung gemäß Figur 5 angedeutet.

Die Anlage 10 und die genannten Ausgestaltungen ermöglichen es, die elektrischen Signale zwischen Pneumatik-Einheiten 12 und Kontrolleinheiten 26 mittels der Druckschläuche 22, 24 zu übertragen.

Wie in Figur 2 skizziert, ist dabei die jeweilige Pneumatik-Einheit 12 mit wenigstens zwei verschiedenen Druckschläuchen 24 verbunden. Diese wenigstens zwei verschiedenen Druckschläuche 24 sind auch mit der Kontrolleinheit 26 verbunden. Die elektrischen Signale werden dann durch eine elektrische Spannung übertragen, welche zwischen den wenigstens zwei Druckschläuchen 24 angelegt wird.

## Patentansprüche

1. Verfahren zum Betreiben einer pneumatisch angetriebenen Anlage zur Handhabung von Werkstücken, mit mehreren pneumatisch betreibbaren oder zur pneumatischen Steuerung dienenden Pneumatik-Einheiten (12), welche Verbindungen zu Druckschläuchen (22, 24) aufweisen und/oder mittels Druckschläuchen (22, 24) fluidisch miteinander verbunden sind, und mit wenigstens einer Kontrolleinheit (26) zur Ansteuerung wenigstens einer der Pneumatik-Einheiten (12) mittels elektrischer Signale und/oder zum Empfangen und Auswerten von elektrischen Signalen von wenigstens einer der Pneumatik-Einheit (12),
wobei die elektrischen Signale zwischen der Kontrolleinheit (26) und wenigstens einer Pneumatik-Einheit (12) durch die Druckschläuche (22, 24) übertragen werden,
**dadurch gekennzeichnet, dass** eine elektrische Spannung zwischen wenigstens zwei verschiedenen Druckschläuchen (22, 24) angelegt wird, welche die Kontrolleinheit (26) und die jeweilige Pneumatik-Einheit (12) verbinden.

2. Verfahren nach Anspruch 1, wobei die elektrische Spannung zeitabhängig verändert wird.

3. Verfahren nach Anspruch 1 oder 2, wobei zur Übertragung der elektrischen Signale zwischen Kontrolleinheit (26) und der jeweiligen Pneumatik-Einheit (12) diese jeweils Signalschnittstellen (30) aufweisen, welche eine leitfähige elektrische Verbindung bereitstellen, und wobei die elektrische Spannung direkt über die leitfähige Verbindung an die Druckschläuche (22, 24) angelegt wird.

4. Anlage (10) zur Handhabung von Werkstücken, insbesondere zur Durchführung eines Verfahrens nach einem der Ansprüche 1 bis 3, umfassend:
- mehrere pneumatisch betreibbare oder zur pneumatischen Steuerung dienende Pneumatik-Einheiten (12), welche Verbindungen zu Druckschläuchen (22, 24) aufweisen und/oder mittels Druckschläuchen (22, 24) fluidisch miteinander verbunden sind,
- wenigstens eine Kontrolleinheit (26) zur Ansteuerung wenigstens einer der Pneumatik-Einheiten (12) mittels elektrischer Signale und/oder zum Empfangen und Auswerten von elektrischen Signalen von wenigstens einer der Pneumatik-Einheiten (12) ,
wobei zur Übertragung der elektrischen Signale zwischen Kontrolleinheit (26) und Pneumatik-Einheit (12) diese jeweils Signalschnittstellen (30) aufweisen, welche mittels Signalübertragungsmitteln (34) miteinander verbunden sind,
wobei die Druckschläuche (22, 24) derart ausgebildet sind, dass mittels des jeweiligen Druckschlauches (22, 24) die elektrischen Signale leitbar sind,
wobei die Druckschläuche (22, 24) die Signalübertragungsmittel (34) bereitstellen, welche mit den Signalschnittstellen (30) verbunden sind,
**dadurch gekennzeichnet, dass** die Kontrolleinheit (26) über wenigstens zwei verschiedene Druckschläuche (24) mit der jeweiligen Pneumatik-Einheit (12) verbunden ist,
und dass die Signalschnittstellen (30) dazu ausgebildet sind, eine elektrische Spannung zwischen den wenigstens zwei verschiedenen Druckschläuchen (22) anzulegen.

5. Anlage nach Anspruch 4, wobei die elektrische Spannung direkt über eine leitfähige Verbindung zwischen den Signalschnittstellen (30) an die Druckschläuche (22, 24) angelegt wird.

6. Anlage (10) nach einem der Ansprüche 4 oder 5, wobei die Pneumatik-Einheiten (12) umfassen:
- wenigstens einen pneumatisch betreibbaren Handhabungseffektor (14),
- wenigstens einen pneumatisch betreibbaren Unterdruckerzeuger (20) zur Versorgung des Handhabungseffektors (14) mit Unterdruck.

7. Anlage (10) nach einem der Ansprüche 4 bis 6, wobei die Pneumatik-Einheiten (12) wenigstens ein ansteuerbares Steuerventil (18, 19) umfassen, welches mittels elektrischer Signale von der Kontrolleinheit (26) steuerbar ist.

8. Anlage (10) nach Anspruch 6, wobei die Kontrolleinheit (26) zur Auswertung von Betriebsdaten des Unterdruckerzeugers (20) und/oder von Betriebsdaten des Handhabungseffektors (14) sowie zur Erzeugung von Steuersignalen in Abhängigkeit der ausgewerteten Betriebsdaten ausgebildet ist.

9. Anlage (10) nach einem der Ansprüche 4 bis 8, wobei die Pneumatik-Einheiten (12) Sensoren (28) zur Detektion von Betriebsdaten aufweisen, und wobei ein Sensor (28) einer jeweiligen Pneumatik-Einheit (12) mit der jeweiligen Signalschnittstelle (30) der Pneumatik-Einheit (12) verbunden ist.

10. Anlage (10) nach einem der Ansprüche 4 bis 9, wobei die Pneumatik-Einheit (12) eine Schlauchkopplung (32) zur Verbindung mit den jeweiligen Druckschläuchen (22, 24) aufweist, wobei die Schlauchkopplung (32) die Signalschnittstelle (30) bereitstellt.

11. Anlage (10) nach Anspruch 10, **dadurch gekennzeichnet, dass** die Schlauchkopplung (32) eine Kontaktierungsschneide (42) aufweist, welche dazu ausgebildet ist, bei Verbindung mit dem Druckschlauch (22, 24) in eine Kontaktierungsschicht (37) des Druckschlauches (22, 24) einzuschneiden.

12. Anlage (10) nach einem der Ansprüche 4 bis 9, wobei die Druckschläuche (22, 24) eine Schlauchwandung (36) aufweisen, welche einen Schlauchinnenraum (38) umschließt, wobei die Schlauchwandung (36) insgesamt aus einem elektrisch leitfähigen Material gebildet ist.

13. Anlage (10) nach einem der Ansprüche 4 - 11, einem der Ansprüche 4 bis 10, wobei die dass die Druckschläuche (22, 24) eine Schlauchwandung (36) aufweisen, welche einen Schlauchinnenraum (38) umschließt, wobei in die Schlauchwandung wenigstens zwei elektrische Leitadern (44) eingebettet sind.

## Claims

1. A method for operating a pneumatically operated system for handling workpieces, comprising a plurality of pneumatic units (12) that can be pneumatically operated or are configured for pneumatic control and have connections with pressure hoses (22, 24) and/or are in fluid communication with each other by means of pressure hoses (22, 24), and comprising at least one control unit (26) for driving at least one of the pneumatic units (12) by means of electrical signals and/or for receiving and evaluating electrical signals from at least one of the pneumatic units (12),
wherein the electrical signals are transmitted between the control unit (26) and at least one pneumatic unit (12) through the pressure hoses (22, 24),
**characterized in that** an electric voltage is applied between at least two different pressure hoses (22, 24) that connect the control unit (26) and the respective pneumatic unit (12).

2. The method according to claim 1, wherein the electric voltage is varied as a function of time.

3. The method according to claim 1 or 2, wherein for transmitting the electrical signals between the control unit (26) and the respective pneumatic unit (12), each have signal interfaces (30) that provide a conductive electrical connection, and wherein the electric voltage is applied directly across the conductive connection to the pressure hoses (22, 24).

4. A system (10) for handling workpieces, in particular for carrying out a method according to any one of claims 1 to 3, comprising:
- a plurality of pneumatic units (12) that can be pneumatically operated or are configured for pneumatic control, which have connections to pressure hoses (22, 24) and/or which are in fluid communication with each other by means of pressure hoses (22, 24),
- at least one control unit (26) for driving at least one of the pneumatic units (12) by means of electrical signals and/or for receiving and evaluating electrical signals from at least one of the pneumatic units (12),
wherein for transmitting the electrical signals between the control unit (26) and the pneumatic unit (12), each have signal interfaces (30) that are connected to each other by means of signal transmission means (34),
wherein the pressure hoses (22, 24) are designed in such a way that the electrical signals can be conducted by means of the respective pressure hoses (22, 24),
wherein the pressure hoses (22, 24) constitute the signal transmission means (34) that are connected to the signal interfaces (30),
**characterized in that** the control unit (26) is connected to the respective pneumatic unit (12) via at least two different pressure hoses (24),
and **in that** the signal interfaces (30) are configured to apply an electric voltage between the at least two different pressure hoses (22).

5. The system according to claim 4, wherein the electric voltage is applied directly to the pressure hoses (22, 24) via a conductive connection between the signal interfaces (30).

6. The system (10) according to claim 4 or 5, wherein the pneumatic units (12) comprise:
- at least one pneumatically operable handling effector (14),
- at least one pneumatically operable vacuum generator (20) for supplying a vacuum to the handling effector (14) .

7. The system (10) according to any one of claims 4 to 6,
wherein the pneumatic units (12) comprise at least one drivable control valve (18, 19) that can be controlled by means of electrical signals from the control unit (26).

8. The system (10) according to claim 6, wherein the control unit (26) is configured for evaluating operating data of the vacuum generator (20) and/or operating data of the handling effector (14) as well as for generating control signals as a function of the evaluated operating data.

9. The system (10) according to any one of claims 4 to 8, wherein the pneumatic units (12) have sensors (28) for detecting operating data, and wherein a sensor (28) of a respective pneumatic unit (12) is connected with the respective signal interface (30) of the pneumatic unit (12) .

10. The system (10) according to any one of claims 4 to 9, wherein the pneumatic unit (12) has a hose coupling (32) for connection with the respective pressure hoses (22, 24), wherein the hose coupling (32) provides the signal interface (30).

11. The system (10) according to claim 10, **characterized in that** the hose coupling (32) has a contact blade (42) configured to cut into a contact layer (37) of the pressure hose (22, 24) when connected with the pressure hose (22, 24).

12. The system (10) according to any one of claims 4 to 9, wherein the pressure hoses (22, 24) have a hose wall (36) that encloses an internal hose space (38), wherein the hose wall (36) is altogether made from an electrically conductive material.

13. The system (10) according to any one of claims 4 to 11, any one of claims 4 to 10, wherein the pressure hoses (22, 24) have a hose wall (36) that encloses an internal hose space (38), wherein at least two electrical conductive wires (44) are embedded in the hose wall.

## Revendications

1. Procédé de gestion d'une installation à entraînement pneumatique pour manipuler des pièces comprenant des unités pneumatiques (12) à fonctionnement pneumatique ou pour la commande pneumatique et qui ont des liaisons avec des tuyaux de pression (22, 24) et/ou sont reliés entre eux par une liaison fluidique à l'aide de tuyaux de pression (22, 24) et au moins une unité de commande (26) pour commander au moins l'une des unités pneumatiques (12) par des signaux électriques et/ou pour recevoir et exploiter des signaux d'au moins une unité de commande (12),
les signaux électriques étant transmis entre l'unité de commande (26) et au moins une unité pneumatique (12) par les tuyaux de pression (22, 24),
procédé **caractérisé en ce qu'**on applique une tension électrique entre au moins deux tuyaux de pression (22, 24) différents qui relient l'unité de commande (26) et l'unité pneumatique (12) respective.

2. Procédé selon la revendication 1, selon lequel on modifie la tension électrique en fonction du temps.

3. Procédé selon la revendication 1 ou 2, selon lequel pour transmettre les signaux électriques entre l'unité de commande (26) et l'unité pneumatique (12) respective, elles comportent des interfaces de signaux (30) qui réalisent une liaison électro-conductrice, et la tension électrique est appliquée directement aux tuyaux de pression (22, 24) par la liaison conductrice.

4. Installation (10) pour manipuler des pièces, notamment pour appliquer un procédé selon l'une des revendications 1 à 3, comprenant:
- plusieurs unités (12) pneumatiques à gestion pneumatique et/ou pour la commande pneumatique, qui sont reliées aux tuyaux de pression (22, 24) et/ou sont reliées entre elles par une liaison fluidique à l'aide des tuyaux de pression (22, 24),
- au moins une unité de commande (26) pour commander au moins l'une des unités pneumatiques (12) à l'aide de signaux électriques et/ou pour recevoir et exploiter des signaux électriques d'au moins l'une des unités pneumatiques (12),
des interfaces de signaux sont prévues pour transmettre les signaux électriques entre l'unité de commande (26) et l'unité pneumatique (12), ces interfaces étant reliées par des moyens de transmission (34) de signaux (30),
les tuyaux de pression (22, 24) sont réalisés pour transmettre les signaux électriques par les tuyaux de pression (22, 24) respectifs,
les tuyaux de pression (22, 24) fournissant les moyens de transmission de signaux (34) reliés aux interfaces de signaux (30),
installation **caractérisée en ce que** l'unité de commande (26) est reliée par au moins deux tuyaux de pression (24) différents à l'unité pneumatique (12) respective, et
les interfaces de signaux (30) sont réalisées pour appliquer une tension électrique entre au moins deux tuyaux de pression (22) différents.

5. Installation selon la revendication 4, dans laquelle la tension électrique est appliquée directement par une liaison conductrice entre les interfaces de signaux (30) et les tuyaux de pression (22, 24).

6. Installation (10) selon l'une des revendications 4 ou 5, dans laquelle les unités pneumatiques (12) comprennent:
- au moins un actionneur de manipulation (14) à fonctionnement pneumatique,
- au moins un générateur de dépression (20) à fonctionnement pneumatique pour fournir une dépression à l'actionneur de manipulation (14).

7. Installation (10) selon l'une des revendications 4 à 6, selon laquelle les unités pneumatiques (12) ont au moins une soupape de commande (18, 19) qui est commandée par des signaux électriques de l'unité de commande (26).

8. Installation (10) selon la revendication 6, dans laquelle l'unité de commande (26) est réalisée pour exploiter les données de fonctionnement du générateur de dépression (20) et/ou les données de fonctionnement de l'actionneur de manipulation (14) ainsi que pour générer des signaux de commande en fonction des données de fonctionnement exploitées.

9. Installation (10) selon l'une des revendications 4 à 8, dans laquelle les unités pneumatiques (12) comportent des capteurs (28) pour détecter les données de fonctionnement, et un capteur (28) d'une unité pneumatique respective (12) est relié à l'interface de signaux (30) respective de l'unité pneumatique (12).

10. Installation (10) selon l'une des revendications 4 à 9, dans laquelle l'unité pneumatique (12) comporte un raccord de tuyau (32) pour relier les tuyaux de pression (22, 24) respectifs, le raccord de tuyau (32) fournissant l'interface de signaux (30).

11. Installation (10) selon la revendication 10, **caractérisée en ce que** le raccord de tuyau (32) a un couteau de contact (42) pour entailler la couche de contact (37) du tuyau de pression (22, 24) lorsqu'il est relié au tuyau de pression (22, 24).

12. Installation (10) selon l'une des revendications 4 à 9, selon laquelle les tuyaux de pression (22, 24) ont une paroi de tuyau (36) entourant le volume intérieur de tuyau (38), la paroi de tuyau (36) étant réalisée globalement en une matière électro-conductrice.

13. Installation (10) selon l'une des revendications 4 à 11, l'une des revendications 4 à 10, dans laquelle les tuyaux de pression (22, 24) ont une paroi de tuyau (36) entourant un volume intérieur (38) et la paroi de tuyau intègre au moins deux brins conducteurs électriques (44).
